# EUROPEAN PATENT APPLICATION

(11) **EP 4 756 383 A1**
(43) Date of publication of application: **10.06.2026**
(21) Application number: 25220046.4
(22) Date of filing: 02.12.2025
(51) Int. Cl.: G01D 5/48, G01D 5/14

(54) **HYBRID DISPLACEMENT SENSOR**

(30) Priority: 04.12.2024 US 202463727706 P
(71) Applicant: Temposonics, LLC, Cary, North Carolina 27513 (US)
(72) Inventor: WILLIAMS, Paul Francis, Cary, NC, 27513 (US); KRAEHE, Frank, Cary, NC, 27513 (US)
(74) Representative: Meissner Bolte Partnerschaft mbB

(57) **Abstract**

A hybrid displacement sensor (100) includes a waveguide (106), a target magnet (110) and a pickup (108). The waveguide includes a longitudinal axis (111), an input end (138) and a return end (134). The target magnet is configured to move along the longitudinal axis relative to the waveguide. The pickup includes a magnetostrictive sensing element (120A) located adjacent to the input end, and a plurality of Hall-effect sensing elements (120B) distributed along the longitudinal axis.

## Description

### CROSS-REFERENCE RELATED APPLICATION(S)

The present application is based on and claims the benefit of U.S. provisional patent application Serial No. 63/727,706, filed December 4, 2024, the content of which is hereby incorporated by reference in its entirety.

### FIELD

Embodiments of the present disclosure generally relate to displacement sensors, and more specifically, to a hybrid displacement sensor that includes a magnetostrictive sensing element and Hall-effect sensing elements.

### BACKGROUND

Magnetostrictive displacement sensors are robust, high resolution instruments which have proven to be useful in many measurement and control applications. Magnetostrictive displacement sensors generally include a sensor assembly, sensor electronics and a target magnet.

The sensor assembly generally includes a waveguide (e.g., conductive wire) and a pickup. The target magnet has a variable position along the waveguide corresponding to the position to be measured. The sensor electronics includes an excitation generator circuit that generates an excitation signal, such as a current pulse, which is conducted through the waveguide.

The excitation signal creates a magnetic field around the waveguide that interacts with the magnetic field of the target magnet to create a magnetostrictive response in the waveguide at the location of the target magnet. The magnetostrictive response takes the form of a sonic wave having mechanical pulse components including a longitudinal wave corresponding to a compression of the waveguide along its longitudinal axis, and a torsional wave corresponding to a torsional strain on the surface of the waveguide around the longitudinal axis.

The pickup is located at an end of the waveguide and includes a magnetostrictive transducer or sensing element that converts the longitudinal or torsional wave into an electrical pulse, which operates as a signature or indicator of the wave in the sensor signal output from the sensing element. The sensor signal may be processed, such as by the sensor electronics, to determine the position of the target magnet based on a time of flight measurement from the generation of the excitation signal and the detection of the indicator of the longitudinal wave or the torsional wave in the sensor signal.

Such magnetostrictive displacement sensors are highly suitable for providing accurate measurements over a "stroke" distance along the waveguide. However, the stroke distance that can be measured by a conventional magnetostrictive displacement sensor does not include "null" regions at the ends of the waveguide. As a result, the length over which the sensor is capable of making a position measurement of the target magnet is reduced by the lengths of these null regions.

One reason for the null region at an input end of the waveguide is due to the reaction of the highly sensitive pickup, which is located near the input end, to the strong magnetic field of the injected excitation signal. Like after striking a tuning fork, the sensor signal output from the pickup in response to the injected excitation signal oscillates for a certain period of time and prevents the detection of an indicator of an electrical pulse corresponding to a torsional or longitudinal wave magnetostrictive response in the waveguide. This period of time translates to a minimum distance for the target magnet from the input end of the waveguide.

Another factor that affects the length of the null region at the input end of the waveguide stems from the magnetic field of the target magnet directly interacting with the pickup. Thus, the null region at the input end generally extends a distance at which the magnitude of the "noise" in the sensor signal produced from the direct interaction with the magnetic field of the target magnet does not prevent the detection of the electrical pulse corresponding to the torsional or longitudinal wave.

As the target magnet gets closer to the return end of the waveguide, reflections of the generated magnetostrictive response from the return end can interfere with the detection of the indicator corresponding to the position of the target magnet. Thus, the null region at the return end of the waveguide is used to avoid such interference problems.

Magnetostrictive sensors utilize various conventional techniques for mitigating some of the causes of the null regions. However, even when such techniques are implemented, the null regions may have a total length of 5 or more centimeters, which adversely affects the useful stroke distance of the magnetostrictive displacement sensor relative to the overall length of the sensor.

### SUMMARY

Embodiments of the present disclosure are generally directed to a hybrid displacement sensor that includes both a magnetostrictive sensing element and Hall-effect sensing elements. One embodiment of the hybrid displacement sensor includes a waveguide, a target magnet and a pickup. The waveguide includes a longitudinal axis, an input end and a return end. The target magnet is configured to move along the longitudinal axis relative to the waveguide. The pickup includes a magnetostrictive sensing element located adjacent to the input end, and a plurality of Hall-effect sensing elements distributed along the longitudinal axis. Additional embodiments of the hybrid displacement sensor include one or more of the aspects described below.

According to one aspect, the magnetostrictive sensing element is configured to output a first sensor signal having an indicator of a magnetostrictive response in the waveguide corresponding to a position of the target magnet relative to the waveguide, and the Hall-effect sensing elements are configured to output one or more second sensor signals corresponding to a position of the target magnet relative to the waveguide.

According to one aspect, the hybrid displacement sensor includes electronics including an excitation generator circuit configured to deliver a current pulse to the input end of the waveguide, and a controller configured to output an estimated position of the target magnet based on the first sensor signal and/or one or more of the second sensor signals.

According to one aspect, the controller is configured to output the estimated position based on the first sensor signal when the target magnet is located within a central region along the longitudinal axis extending between the input end and the return end, and the controller is configured to output the estimated position based on the one or more second sensor signals when the target magnet is located within an input null region along the longitudinal axis that extends from a location near the input end toward the central region and/or when the target magnet is located within a return null region along the longitudinal axis that extends from near the return end toward the central region.

According to one aspect, the controller is configured to output the estimated position of the target magnet based on the first sensor signal and the one or more second sensor signals when the target magnet is in an overlapping region along the longitudinal axis that is between the central region and the input null region and/or between the central region and the return null region.

According to one aspect, the first sensor signal includes an indicator of a magnetostrictive response that is generated based on the current pulse and a magnetic field of the target magnet when the target magnet is located within the central region.

According to one aspect, the magnetostrictive sensing element includes a sensor magnet and a coil, wherein relative movement between the magnet and the coil in response to the magnetostrictive response generates the first sensor signal in the coil, or a piezoelectric material configured to generate the first sensor signal in response to a mechanical stress on the piezoelectric material caused by the magnetostrictive response.

According to one aspect, the Hall-effect sensing elements are distributed along the input null region of the longitudinal axis and/or along the return null region of the longitudinal axis.

According to one aspect, the Hall-effect sensing elements are distributed along at least a portion of the overlapping region of the longitudinal axis.

According to one aspect, the Hall-effect sensing elements are each configured to detect a magnitude of a magnetic field in at least two dimensions.

According to one aspect, the Hall-effect sensing elements are each configured to detect a magnitude of a magnetic field in three dimensions.

Another embodiment of the hybrid displacement sensor includes a sensor assembly and sensor electronics. The sensor assembly includes a waveguide having a longitudinal axis, an input end and a return end, a target magnet configured to move along the longitudinal axis relative to the waveguide, and a pickup including a magnetostrictive sensing element located adjacent to the input end, and a plurality of Hall-effect sensing elements distributed along the longitudinal axis. The sensor electronics includes a controller configured to output an estimated position of the target magnet based on a first sensor signal generated by the magnetostrictive sensing element and/or one or more second sensor signals generated by one or more of the Hall-effect sensing elements. Additional embodiments of the hybrid displacement sensor include one or more of the aspects described below.

According to one aspect, the sensor electronics includes an excitation generator circuit configured to deliver a current pulse to the input end of the waveguide.

According to one aspect, the controller is configured to output the estimated position based on the first sensor signal when the target magnet is located within a central region along the longitudinal axis extending between the input end and the return end, and the controller is configured to output the estimated position based on the one or more second sensor signals when the target magnet is located within an input null region along the longitudinal axis that extends from a location near the input end toward the central region and/or when the target magnet is located within a return null region along the longitudinal axis that extends from near the return end toward the central region.

According to one aspect, the controller is configured to output the estimated position of the target magnet based on the first sensor signal and the one or more second sensor signals when the target magnet is in an overlapping region along the longitudinal axis that is between the central region and the input null region and/or between the central region and return null region.

According to one aspect, the Hall-effect sensing elements are distributed along the input null region of the longitudinal axis and/or along the return null region of the longitudinal axis.

According to one aspect, the Hall-effect sensing elements are distributed along at least a portion of the overlapping region of the longitudinal axis.

According to one embodiment of the method of operating a hybrid displacement sensor, the hybrid displacement sensor includes a sensor assembly and sensor electronics. The sensor assembly includes a waveguide having a longitudinal axis, an input end and a return end, a target magnet configured to move along the longitudinal axis relative to the waveguide, and a pickup including a magnetostrictive sensing element located adjacent to the input end and a plurality of Hall-effect sensing elements distributed along the longitudinal axis. The sensor electronics includes an excitation generator circuit and a controller. The method includes performing at least one of: delivering a current pulse to the input end of the waveguide using the excitation generator and generating a first sensor signal based on the current pulse using the magnetostrictive sensing element; and generating one or more second sensor signals using the Hall-effect sensing elements. The method also includes outputting an estimated position of the target magnet based on at least one of the first sensor signal and the one or more second sensor signals using the controller. Additional embodiments of the method include one or more of the aspects described below.

According to one aspect, outputting the estimated position of the target magnet includes outputting the estimated position of the target magnet based on the first sensor signal when the target magnet is within a central region along the longitudinal axis extending between the input end and the return end; and outputting the estimated position of the target magnet based on the one or more second sensor signals when the target magnet is within an input null region along the longitudinal axis that extends from a location near the input end toward the central region and/or when the target magnet is located within a return null region along the longitudinal axis that extends from near the return end toward the central region. The Hall-effect elements are distributed along the input null region and/or the return null region of the longitudinal axis.

According to one aspect, outputting the estimated position of the target magnet includes outputting the estimated position of the target magnet based on the first sensor signal and the one or more second sensor signals when the target magnet is in an overlapping region along the longitudinal axis that is between the central region and input null region and/or between the central region and the return null region.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the Background.

### BRIEF DESCRIPTION OF THE DRAWINGS

FIGS. 1 and 2 respectively are a schematic pictorial view and a simplified circuit diagram of an example of a hybrid displacement sensor, in accordance with embodiments of the present disclosure.
FIGS. 3A-D are isometric views of examples of pickups having magnetostrictive sensing elements, in accordance with embodiments of the present disclosure.
FIG. 4 is a simplified side view of an example of a hybrid displacement sensor, in accordance with embodiments of the present disclosure.
FIG. 5 is a simplified diagram illustrating an example of a controller, in accordance with embodiments of the present disclosure.

### DETAILED DESCRIPTION OF ILLUSTRATIVE EMBODIMENTS

Embodiments of the present disclosure are described more fully hereinafter with reference to the accompanying drawings. Elements that are identified using the same or similar reference characters refer to the same or similar elements. The various embodiments of the present disclosure may, however, be embodied in many different forms and should not be construed as limited to the specific embodiments set forth herein. Rather, embodiments are described so that this disclosure will be thorough and complete, and will fully convey the scope of the embodiments to those skilled in the relevant art.

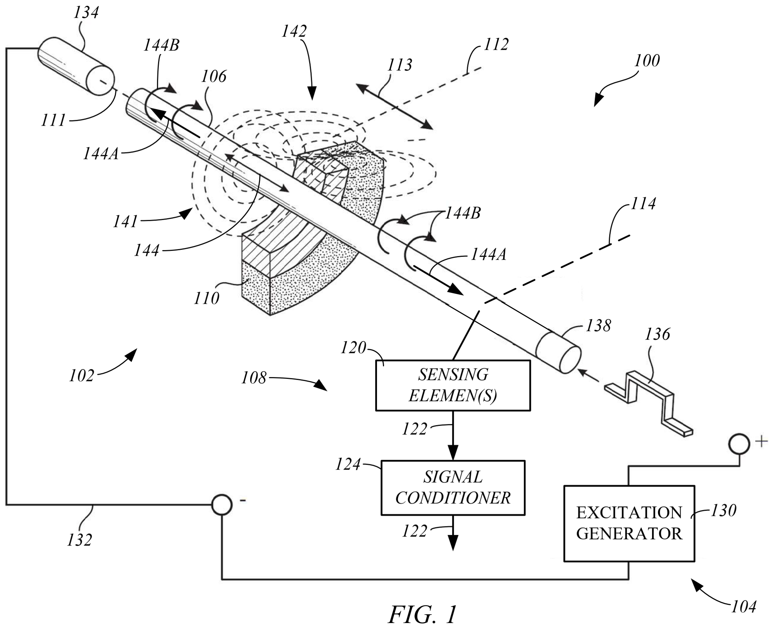

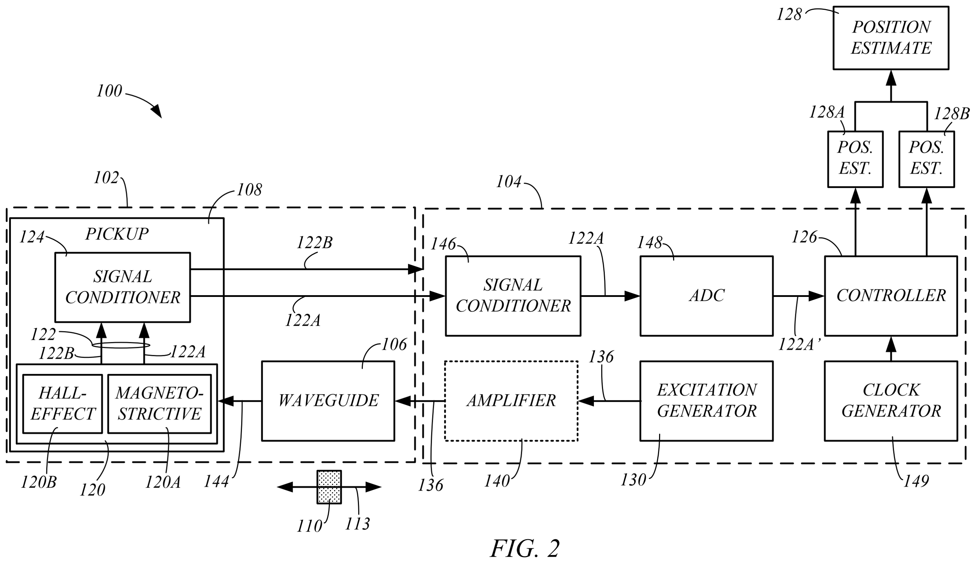

FIGS. 1 and 2 respectively are a schematic pictorial view and a simplified circuit diagram of an example of a hybrid displacement sensor 100, in accordance with embodiments of the present disclosure. The displacement sensor 100 includes a sensor assembly 102 and sensor electronics 104. The sensor assembly 102 includes a conductor having magnetoelastic properties, referred to as a waveguide 106 and a pickup 108.

At least one target magnet 110 is located near the waveguide 106 and has a position 112 that is adjustable along an axis 111 of the waveguide 106, as indicated by arrow 113. The target magnet 110 may take the form of a bar magnet positioned alongside the waveguide 106, a ring magnet that surrounds the waveguide 106, or another suitable form.

The displacement sensor 100 is generally configured to measure the position 112 of the target magnet 110 along the waveguide 106 relative to a reference position 114 using one or more sensing elements 120 of the pickup 108. In one embodiment, the sensing elements 120 include a magnetostrictive sensing element 120A configured to output a sensor signal 122A and a plurality of Hall-effect sensing elements 120B that are configured to output one or more sensor signals 122B (hereinafter sensor signals 122B), as indicated in FIG. 2. A signal conditioner 124 of the pickup 108 may be used to isolate the sensing elements 120 from electrical interference and condition (e.g., amplify, rectify, filter, etc.) the sensor signal(s) 122, in accordance with conventional techniques.

The sensor electronics 104 includes a controller 126 that is configured to output an estimate 128 of the target magnet position 112 based on sensor signal 122A, the sensor signals 122B, or a combination of the sensor signals 122A and 122B, depending on an operating mode of the displacement sensor 100. Thus, the position estimate 128 may correspond to a position estimate 128A that is based on the sensor signal 122A output by the magnetostrictive sensing element 120A, a position estimate 128B that is based on the sensor signals 122B output by the Hall-effect sensing elements 120B, and/or a combination of the position estimates 128A and 128B, as indicated in FIG. 2.

The position estimate 128A may be determined by the controller 126 using conventional techniques. For example, the sensor electronics 104 includes an excitation generator circuit 130 that is connected to the waveguide 106. A closed electrical circuit may be formed by the excitation generator circuit 130, the waveguide 106, and a return wire 132 that connects a return end 134 of the waveguide 106 back to the excitation generator circuit 130, as shown in FIG. 1. The controller 126 uses the excitation generator circuit 130 to generate an excitation signal (e.g., electrical current pulse) 136 that is delivered to an input end 138 of the waveguide 106. An amplifier 140 (FIG. 2) of the sensor electronics 104 may be used to amplify the current pulse 136 before applying it to the waveguide 106.

The transmission of the current pulse 136 through the waveguide 106 generates a magnetic field 141 that interacts with the magnetic field 142 of the magnet 110 to generate a mechanical magnetostrictive response (e.g., acoustic waves) 144 in the waveguide 106, which includes a longitudinal wave 144A (e.g., longitudinal compression) and a torsional wave 144B (e.g., torsional strain), as indicated in FIG. 1.

The magnetostrictive response 144 travels from both sides of the magnet 110 along the waveguide 106. For example, a portion of the magnetostrictive response 144 may travel along the waveguide 106 from the position 112 of the magnet 110 toward the end 134 and possibly to a damper (not shown) that reduces or eliminates propagation of the acoustic waves 144 back through the waveguide 106. Additionally, a portion of the magnetostrictive response 144 travels from the position 112 of the magnet 110 toward the input end 138, at which the magnetostrictive sensing element 120A is used to sense the magnetostrictive response 144, such as the longitudinal wave 144A and/or the torsional wave 144B, and output the sensor signal 122A that includes one or more indicators of the magnetostrictive response 144. The one or more indicators may comprise a transient change or pulse in the magnitude of the signal 122A, for example.

The example sensor electronics 104 may include a signal conditioner 146 that processes the sensor signal 122A (e.g., amplifies, filters, etc.), before sampling the signal 122A using an analog-to-digital converter 148 to produce samples 122A' that are processed by the controller 126 to identify the indicators. The controller 126 determines the period of time from when the current pulse 136 is generated to the time corresponding to the indicator of the magnetostrictive response 144 in the signal 122A or the samples 122A'. The period of time may be measured by the controller 126 based on a clock signal issued by a clock generator 149, in accordance with conventional techniques. The controller 126 generates the estimate 128A of the target magnet position 112 based on the determined period of time. Depending on the operational mode of the displacement sensor 100, the controller 126 may output the position estimate 128A as the final position estimate 128, as discussed below.

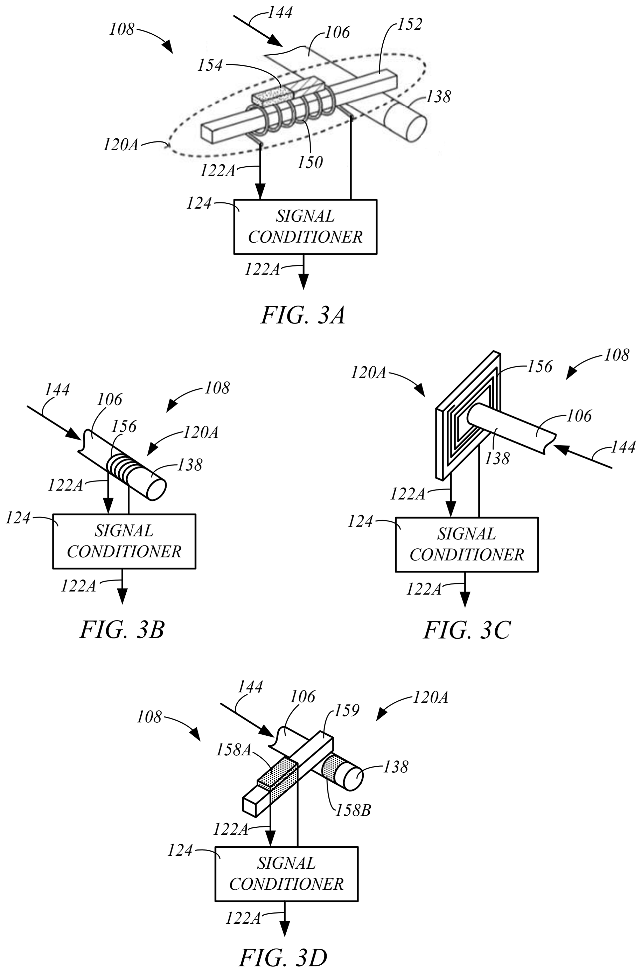

FIGS. 3A-D are isometric views of examples of pickups 108 having magnetostrictive sensing elements 120A, in accordance with embodiments of the present disclosure. The example sensing element 120A of FIG. 3A includes a coil 150 that is attached to the waveguide 106, such as through a rigid member 152. A bias or sensor magnet 154 is positioned near the coil 150 and produces a magnetic field that surrounds the coil 150. When the magnetostrictive response 144 (e.g., longitudinal wave or torsional wave) traveling through the waveguide 106 reaches the member 152, it generates a strain in the member 152 that causes a change in the magnetization of the member 152 in accordance with the Villari effect. The variable permeability of the member 152 in combination with the magnetic field of the bias magnet 154 results in a variation in the flux through the coil 150, which drives a current pulse indicator of the magnetostrictive response 144 in the sensor signal 122A. As mentioned above, the sensor signal 122A from the coil 150 may be processed by a signal conditioner 146 prior to its delivery to the controller 126 (FIG. 2).

One alternative to this arrangement is to form the member 152 out of a magnetic material to form a sensor magnet and support the coil 150 in a manner that allows the magnetic member 152 to move relative to the coil 150. Thus, when the magnetic member 152 vibrates in response to the magnetostrictive response 144, a corresponding current pulse indicator is induced in the sensor signal 122A from the coil 150 due to the movement of the magnetic field relative to the coil 150.

The sensing element 120A may include a conductive coil 156 that is wrapped around the waveguide 106, as shown in FIG. 3B, or the conductive coil 156 may be oriented in a plane that is generally perpendicular to the waveguide 106, shown in FIG. 3C. In each case, the magnetostrictive response 144 traveling through the waveguide 106 induces a current pulse or indicator in the sensor signal 122A traveling through the coil 156.

The example sensing element 120A shown in FIG. 3D comprises a piezoelectric material 158 that is connected to the waveguide 106 and is configured to be physically strained in response to the magnetostrictive response 144. The strain on the piezoelectric material 158 produces a current pulse in the sensor signal 122A and forms an indicator of the response 144. The piezoelectric material 158 may be exposed to the magnetostrictive response 144 through a piezoelectric material 158A that is connected to a side of the waveguide through a rigid member 159, or a piezoelectric material 158B that is connected to or in line with the waveguide 106, for example.

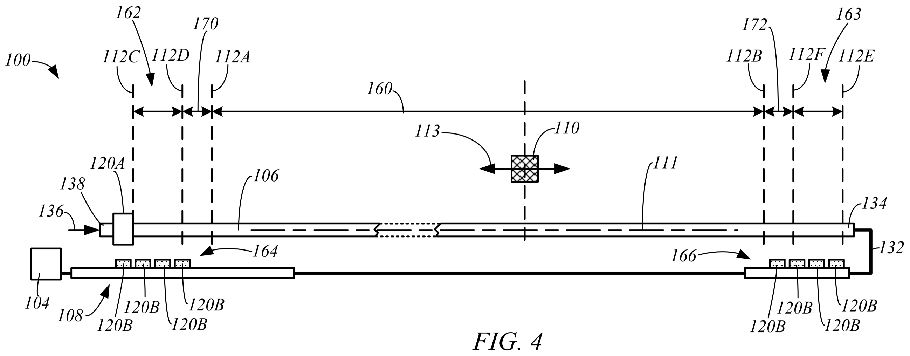

FIG. 4 is a simplified side view of an example of the hybrid displacement sensor 100, in accordance with embodiments of the present disclosure. In some embodiments, the position estimate 128 is based solely on the position estimate 128A that is determined using the magnetostrictive sensing element 120A when the target magnet position 112 is in a central region 160 of the waveguide 106, such as using the conventional technique described above. The central region may extend from a position 112A to a position 112B. As discussed above, the length of the central region 160 is generally limited by an input null region 162 at the input end 138 and a return null region 163 at the return end 134 of the waveguide 106. Thus, conventional magnetostrictive displacement sensors have a stroke length that is limited by the null regions 162 and 163.

In some embodiments, the Hall-effect sensing elements 120B are distributed along the axis 111 adjacent to the waveguide 106 over the input null region 162 and/or the return null region 163, as shown in FIG. 4, and are used to overcome the stroke distance limitations of the magnetostrictive sensing element 120A by detecting the position 112 of the target magnet 110 within the null regions 162 and/or 163. As a result, the hybrid sensor 100 has an increased stroke distance over which the position 112 of the target magnet 110 may be detected relative to conventional magnetostrictive displacement sensors utilizing only a magnetostrictive sensing element.

As shown in FIG. 4, the magnetostrictive sensing element 120A is located adjacent to the input end 138 of the waveguide 106, such as within approximately 5 millimeters, such as 4-6 millimeters, from the input end 138. The input null region 162 generally includes a region along the axis 111 over which the position 112 of the target magnet 110 cannot be accurately detected using the magnetostrictive sensing element 120A due to interference caused by the injected excitation signal 136 and/or the magnetic field 141 of the target magnet 110, for example. Thus, the null region 162 generally extends from a position 112C near the input end 138 toward the central region 160, as indicated in FIG. 4, such as to the position 112A, or to a position 112D that is offset from the position 112A toward the input end 138. In one example, the null region 162 is approximately 3-4 centimeters.

The return null region 163 generally includes a region along the axis 111 over which the position 112 of the target magnet 110 cannot be accurately detected using the magnetostrictive sensing element 120A due to interference caused by reflections of the magnetostrictive response 144 at the return end 134 or other interference, for example. Accordingly, the null region 163 generally extends from a position 112E near the return end 134 toward the central region 160, as indicated in FIG. 4, such as to the position 112B, or to a position 112F that is offset from the position 112B toward the return end 134. In one example, the null region 163 is approximately 3-4 centimeters.

The Hall-effect sensing elements 120B may include a first group 164 of the elements 120B at the input null region 162 of the waveguide 106 and/or a second group 166 of the elements 120B at the return null region 163 of the waveguide 106, as shown in FIG. 4. The number of the sensing elements 120B in each group 164 and 166 may vary depending on the length of the corresponding null region 162 and 163. In one embodiment, the group 164 and the group 166 each include three or more sensing elements 120B, or approximately one sensing elements 120B per centimeter of null region, for example.

The Hall-effect sensing elements 120B may be conventional devices that include one or more Hall elements that produce a voltage that is proportional to an axial component of an applied magnetic field based on the well-known Hall effect. In one embodiment, each sensing element 120B includes two or three Hall elements for detecting a magnitude of an applied magnetic field in different directions, which are orthogonal to each other, such as two directions (X-axis and Y-axis) or three different directions (X-axis, Y-axis and Z-axis). One example of a suitable Hall-effect sensing element 120B is the Hall-effect sensor TMAG5273 produced by Texas Instruments, which measures the magnetic field of an applied magnetic field in three orthogonal dimensions.

Various fixed magnetic fields of the sensor 100, such as that from a bias magnet 154 of the sensing element 120A (FIG. 3A) and/or other magnetic components, can affect the output from the Hall-effect sensing elements 120B. When the sensing elements 120B utilize single direction Hall elements, only the magnitude of the applied field is detected. As a result, the precise orientation of the magnetic field cannot be determined. This can limit the accuracy and robustness of position measurements that are taken using the sensor signals 122B output from the sensing elements 120B.

The use of Hall-effect sensing elements 120B that are configured to sense the applied magnetic field in two or three dimensions, allows the sensing elements 120 to establish the magnitude and an orientation of the applied magnetic field. In some embodiments, a trim procedure may be performed on the hybrid displacement sensor 100 when the target magnet 110 is absent to establish a set of magnetic field amplitude values in the X-axis, Y-axis and/or Z-axis for the fixed magnetic fields that are generated by various components (e.g., bias magnet 154) of the sensor 100. This set of trim values may then be used to compensate the magnetic field amplitude measurements taken by the Hall-effect sensing elements 120 during a displacement sensing operation by the hybrid sensor 100 to improve the detection of the target magnet position 112.

Values of the sensor signals 122B from the Hall-effect sensing elements 120B are established for different positions 112 of the target magnet 110, such as along the regions 160 or 162, using conventional techniques and stored in memory of the hybrid sensor 100, such as memory of the controller 126, for example. The values may be stored as a look-up table, a formula, or in another suitable conventional manner. During a displacement sensing operation, the controller 126 compares the values represented by sensor signals 122B to the stored values to determine a corresponding position 112 of the target magnet 110.

In some embodiments, the controller 126 may determine the position estimate 128 of the target magnet 110 solely based on the position estimate 128A determined using the magnetostrictive sensing element 120A when the target magnet position 112 is within the central region 160, solely based on the position estimate 128B determined using the group 164 of Hall-effect sensing elements 120B when the target magnet position 112 is within the input null region 160, and solely based on the position estimate 128B determined using the group 166 of Hall-effect sensing elements 120B when the target magnet position 112 is within the return null region 163.

An initial determination of whether the position 112 of the target magnet is within the central null region 160, the input null region 162, or the return null region 163 may be performed by the controller 126 based on one or both of the sensor signals 122A and 122B. In one embodiment, the controller 126 initially processes the sensor signals 122B to determine if one or more of the Hall-effect sensing elements 120B detects the presence of the magnetic field 141 of the target magnet 110. If the Hall-effect sensing elements 120B do not detect the presence of the magnetic field 141 (e.g., null signals 122B) indicating that the target magnet position 112 is within the central region 160, then the controller 126 controls the excitation generator 130 to generate the excitation signal 136, determines the position estimate 128A based on the sensor signal 122A of the magnetostrictive sensing element 120A, and generates the position estimate 128 based solely on the position estimate 128A.

If the sensor signals 122B indicate the presence of the target magnet 110 in the input null region 162 or the return null region 163, such as due to a detected magnetic field amplitude and/or orientation meeting predefined threshold requirements, then the controller 126 determines the position estimate 128B using the sensor signals 122B from the Hall-effect sensing elements 120B in the corresponding group 164 or 166, and generates the position estimate 128 based solely on the position estimate 128B.

Some embodiments of the present disclosure overcome issues that may arise at the crossover between the central region 160 and the input null region 162, and/or between the central region 160 and the return null region 163, such as abrupt jumps in the position estimate 128. In some embodiments, an overlapping region 170 may be designated between the central region 160 and the input null region 162, such as from the position 112A to the position 112D, for example, as shown in FIG. 4. Likewise, an overlapping region 172 may be designated between the central region 160 and the return null region 163, such as from the position 112B to the position 112F, for example. The group 164 of the Hall-effect sensing elements 120B may extend either partially or completely into the overlapping region 170 and the group 166 of the Hall-effect sensing elements 120B may extend either partially or completely into the overlapping region 172. In some embodiments, the overlapping region 170 may span a length of approximately 5-10 millimeters, and the overlapping region 172 may span a length of approximately 5-10 millimeters.

In one embodiment, when the target magnet 110 is within the overlapping region 170 or 172, the controller 126 generates the position estimate 128 based on both the position estimate 128A and the position estimate 128B using the corresponding group 164 or 166 of the Hall-effect sensing elements 120B. The controller 126 may initially determine that the target magnet 110 is within one of the overlapping regions 170 or 172 based on the sensor signals 122B, such as when a magnetic field amplitude and/or orientation detected using the group 164 or the group 166 of the Hall-effect sensing elements 120B indicates a position 112 that is within one of the regions 170 or 172.

When the controller 126 determines that the target magnet position 112 is within the region 170 or 172, the controller 126 generates a the position estimate 128B based on the sensor signals 122B of the corresponding group 164 or 166. The controller 126 also generates the position estimate 128A by delivering an excitation signal 136 through the waveguide 106 using the excitation generator 130 and processing the sensor signal 122A, as discussed above.

The position estimate 128 is then determined based on the position estimates 128A and 128B. In one embodiment, weighting is applied to the position estimates 128A and 128B and the average value of the weighted estimates is used to determine the position estimate 128 that is output by the controller 126. As the target magnet 110 moves from closer to the central region 160 outward toward the corresponding input null region 162 or the return null region 163, the weighting applied to the position estimate 128A is decreased while the weighting applied to the position estimate 128B is increased. Likewise, as the target magnet 110 moves from the input null region 162 or the return null region 163 toward the central region 160, the weighting applied to the position estimate 128 is increased while the weighting applied to the position estimate 128B is decreased.

In one example, the weighting to be applied to the position estimates 128A and 128B is based on the initial position estimate 128B determined using the sensor signals 122B. Thus, in addition to determining whether the target magnet 110 is within one of the overlapping regions 170 or 172, the controller 126 may use the position estimate 128B to assign the weightings.

The weightings generally operate to ensure a smooth transition of the position estimate 128 from when the position estimate 128 is based solely on the sensor signal 122A generated by the magnetostrictive sensing element 120A, such as when the position 112 of the target magnet 110 is within the central region, to when the position estimate 128 is based solely on the sensor signals 122B generated by the Hall-effect sensing elements 120B at the input null region 162 or the return null region 163. In one example, the weighting transitions from 0% being applied to the position estimate 128A and 100% applied to the position estimate 128B when the target magnet 110 is estimated to be at the position 112D or at the position 112F, to 100% being applied to the position estimate 128A and 0% being applied to the position estimate 128B when the target magnet 110 is estimated to be at the position 112A or 112B.

Additional embodiments are directed to methods of using the hybrid displacement sensor 100. In one embodiment, the hybrid displacement sensor 100 includes a sensor assembly comprising the sensor electronics 104, the waveguide 106, the target magnet 110 and the pickup 108, formed in accordance with one or more embodiments described above. The waveguide 106 includes a longitudinal axis 111, an input end 138 and a return end 134, such as shown in FIG. 4. The target magnet 110 is configured to move along the longitudinal axis 111 relative to the waveguide 106. The pickup includes a magnetostrictive sensing element 120A and a plurality of Hall-effect sensing elements 120B, which are distributed along the axis 111. The sensor electronics includes an excitation generator 130 and a controller 126.

In one embodiment of the method, a current pulse 136 is delivered to the input end 138 of the waveguide 106 using the excitation generator 130 and a senor signal 122A is generated based on the current pulse 136 using the magnetostrictive sensing element 120A, and/or one or more sensor signals 122B are generated using the Hall-effect sensing elements 120B. The controller 126 outputs a position estimate 128 based on the sensor signal 122A and/or the sensor signal 122B, in accordance with the embodiments described above. For example, the position estimate 128 may be based on the position estimate 128A determined using the sensor signal 122A when the target magnet 110 is within the central region 160 along the longitudinal axis 111 extending between the input end 138 and the return end 134. The position estimate 128 may be based on the position estimate 128B determined using the sensor signals 122B when the target magnet 110 is within the input null region 162 or the return null region 163. Additionally, the position estimate 128 may be based on both the position estimates 128A and 128B when the target magnet is in the overlapping region 170 between the central region 160 and the input null region 162 or the overlapping region 172 between the central region 160 and the return null region 163.

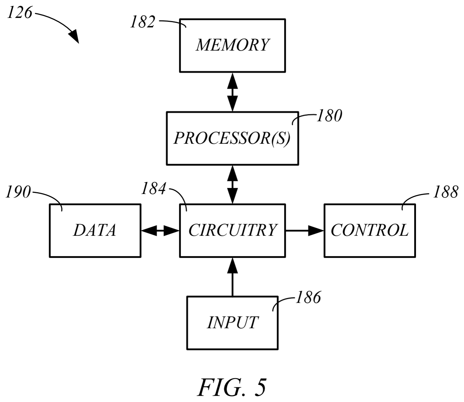

FIG. 5 is a simplified diagram illustrating an example controller 126, in accordance with embodiments of the present disclosure. The example controller 126 may include one or more processors 180 and memory 182, which may be local memory or memory that is accessible to the controller 126. The one or more processors 180 are configured to perform various functions described herein in response to the execution of instructions contained in the memory 182, for example.

The one or more processors 180 may be components of one or more computer-based systems, and may include one or more control circuits, microprocessor-based engine control systems, and/or one or more programmable hardware components, such as a field programmable gate array (FPGA). The memory 182 represents any suitable patent subject matter eligible computer-readable media and does not include transitory waves or signals. Examples of the memory 182 include conventional data storage devices, such as hard disks, CD-ROMs, optical storage devices, magnetic storage devices and/or other suitable data storage devices or computer-readable media.

The controller 126 may include circuitry 184 for use by the one or more processors 180 to receive input signals 186 (e.g., sensor signals 122, clock signals from the clock generator 149, etc.), issue control signals 188 (e.g., control signals to the excitation generator 130, etc.) and/or communicate data 190 (e.g., position estimate 128, etc.), such as in response to the execution of the instructions stored in the memory 182 by the one or more processors 180.

Although the embodiments of the present disclosure have been described with reference to preferred embodiments, workers skilled in the art will recognize that changes may be made in form and detail without departing from the spirit and scope of the present disclosure.

Functions recited herein may be performed by a single controller or processor, multiple controllers or processors, or at least one controller or processor. As used herein, when one or more functions are described as being performed by a controller (e.g., controller 126), one or more controllers, at least one controller, a processor (e.g., such as a specific processor), one or more processors or at least one processor, embodiments include the performance of the function(s) by a single controller or processor, or multiple controllers or processors, such as in response to the execution of program instructions stored in a non-transitory computer-readable medium, unless otherwise specified. Furthermore, as used herein, when multiple functions are performed by at least one controller or processor, all of the functions may be performed by a single controller or processor, or some functions may be performed by one controller or one processor, and other functions may be performed by another controller or processor. Thus, the performance of one or more functions by a controller or at least one controller or processor does not require that all of the functions are performed by each of the controllers or processors, or by a single one of the controllers or processors.

## Claims

1. A hybrid displacement sensor (100) including a sensor assembly (102) comprising:
a waveguide (106) having a longitudinal axis (111), an input end (138) and a return end (134);
a target magnet (110) configured to move along the longitudinal axis relative to the waveguide; and
a pickup (108) comprising:
a magnetostrictive sensing element (120A) located adjacent to the input end; and
a plurality of Hall-effect sensing elements (120B) distributed along the longitudinal axis.

2. The hybrid displacement sensor according to claim 1, wherein:
the magnetostrictive sensing element is configured to output a first sensor signal (122A) having an indicator of a magnetostrictive response in the waveguide corresponding to a position of the target magnet relative to the waveguide; and
the Hall-effect sensing elements are configured to output one or more second sensor signals (122B) corresponding to a position of the target magnet relative to the waveguide.

3. The hybrid displacement sensor according to any one of the preceding claims, including sensor electronics (104) comprising:
an excitation generator circuit (130) configured to deliver a current pulse (136) to the input end of the waveguide; and
a controller (126) configured to output an estimated position (128) of the target magnet based on the first sensor signal and/or one or more of the second sensor signals, and in one embodiment, wherein:
the controller is configured to output the estimated position based on the first sensor signal when the target magnet is located within a central region (160) along the longitudinal axis extending between the input end and the return end; and
the controller is configured to output the estimated position based on the one or more second sensor signals when the target magnet is located within an input null region (162) along the longitudinal axis that extends from a location near the input end toward the central region and/or when the target magnet is located within a return null region (163) along the longitudinal axis that extends from near the return end toward the central region;
and in a further embodiment, wherein the controller is configured to output the estimated position of the target magnet based on the first sensor signal and the one or more second sensor signals when the target magnet is in an overlapping region (170, 172) along the longitudinal axis that is between the central region and the input null region and/or between the central region and the return null region.

4. The hybrid displacement sensor according to any one of claims 2 or 3, wherein the first sensor signal includes an indicator of a magnetostrictive response that is generated based on the current pulse and a magnetic field of the target magnet when the target magnet is located within the central region,
and in one embodiment, wherein the magnetostrictive sensing element comprises:
a sensor magnet (152, 154) and a coil (150), wherein relative movement between the magnet and the coil in response to the magnetostrictive response generates the first sensor signal in the coil; or
a piezoelectric material (158) configured to generate the first sensor signal in response to a mechanical stress on the piezoelectric material caused by the magnetostrictive response; and/or wherein the Hall-effect sensing elements are distributed along the input null region of the longitudinal axis and/or along the return null region of the longitudinal axis.

5. The hybrid displacement sensor according to claim 4, wherein the Hall-effect sensing elements are distributed along at least a portion of the overlapping region of the longitudinal axis.

6. The hybrid displacement sensor according to claim 4, wherein the Hall-effect sensing elements are each configured to detect a magnitude of a magnetic field in at least two dimensions.

7. The hybrid displacement sensor according to claim 4, wherein the Hall-effect sensing elements are each configured to detect a magnitude of a magnetic field in three dimensions.

8. A hybrid displacement sensor (100) comprising:
a sensor assembly (102) comprising:
a waveguide (106) having a longitudinal axis (111), an input end (138) and a return end (134);
a target magnet (110) configured to move along the longitudinal axis relative to the waveguide; and
a pickup (108) comprising:
a magnetostrictive sensing element (120A) located adjacent to the input end; and
a plurality of Hall-effect sensing elements (120B) distributed along the longitudinal axis; and
sensor electronics (104) comprising a controller (126) configured to output an estimated position (128) of the target magnet based on at least one of a first sensor signal (122A) generated by the magnetostrictive sensing element and one or more second sensor signals (122B) generated by one or more of the Hall-effect sensing elements.

9. The hybrid displacement sensor according to claim 8, wherein the sensor electronics comprises an excitation generator (130) circuit configured to deliver a current pulse (136) to the input end of the waveguide.

10. The hybrid displacement sensor according to claim 8, wherein:
the controller is configured to output the estimated position based on the first sensor signal when the target magnet is located within a central region (160) along the longitudinal axis extending between the input end and the return end; and
the controller is configured to output the estimated position based on the one or more second sensor signals when the target magnet is located within an input null region (162) along the longitudinal axis that extends from a location near the input end toward the central region and/or when the target magnet is located within a return null region (163) along the longitudinal axis that extends from near the return end toward the central region, and in one embodiment, wherein the controller is configured to output the estimated position of the target magnet based on the first sensor signal and the one or more second sensor signals when the target magnet is in an overlapping region (170, 172) along the longitudinal axis that is between the central region and the input null region and/or between the central region and return null region.

11. The hybrid displacement sensor according to claim 10, wherein the Hall-effect sensing elements are distributed along the input null region of the longitudinal axis and/or along the return null region of the longitudinal axis.

12. The hybrid displacement sensor according to claim 11, wherein the Hall-effect sensing elements are distributed along at least a portion of the overlapping region of the longitudinal axis.

13. A method of operating a hybrid displacement sensor (100), which includes:
a sensor assembly (102) comprising:
a waveguide (106) having a longitudinal axis (111), an input end (138) and a return end (134);
a target magnet (110) configured to move along the longitudinal axis relative to the waveguide; and
a pickup (108) comprising:
a magnetostrictive sensing element (120A) located adjacent to the input end; and
a plurality of Hall-effect sensing elements (120B) distributed along the longitudinal axis; and
sensor electronics (104) comprising:
an excitation generator circuit (130); and
a controller (126),
the method comprising:
performing at least one of:
delivering a current pulse (136) to the input end of the waveguide using the excitation generator, and generating a first sensor signal (122A) based on the current pulse using the magnetostrictive sensing element; and
generating one or more second sensor signals (122B) using the Hall-effect sensing elements; and
outputting an estimated position (128) of the target magnet based on at least one of the first sensor signal and the one or more second sensor signals using the controller.

14. The method according to claim 13, wherein:
outputting the estimated position of the target magnet comprises:
outputting the estimated position of the target magnet based on the first sensor signal when the target magnet is within a central region (160) along the longitudinal axis extending between the input end and the return end; and
outputting the estimated position of the target magnet based on the one or more second sensor signals when the target magnet is within an input null region (162) along the longitudinal axis that extends from a location near the input end toward the central region and/or when the target magnet is located within a return null region (163) along the longitudinal axis that extends from near the return end toward the central region; and
the Hall-effect sensing elements are distributed along the input null region and/or the return null region of the longitudinal axis.

15. The method according to claim 14, wherein outputting the estimated position of the target magnet comprises outputting the estimated position of the target magnet based on the first sensor signal and the one or more second sensor signals when the target magnet is in an overlapping region (170, 172) along the longitudinal axis that is between the central region and input null region and/or between the central region and the return null region.
